# EUROPÄISCHE PATENTSCHRIFT

(11) **EP 2 814 769 B1**
(45) Veröffentlichungstag und Bekanntmachung des Hinweises auf die Patenterteilung: **30.12.2015**
(21) Anmeldenummer: 13703438.5
(22) Anmeldetag: 12.02.2013
(51) Int. Cl.: B66B 5/16, B66B 5/22

(54) **BREMSSYSTEM MIT VARIABLER REIBUNG**
BRAKING SYSTEM WITH VARIABLE FRICTION
SYSTÈME DE FREINAGE DOTÉ D'UN FROTTEMENT VARIABLE

(30) Priorität: 17.02.2012 EP 12155870
(43) Veröffentlichungstag der Anmeldung: 24.12.2014
(73) Patentinhaber: Inventio AG, 6052 Hergiswil NW (CH)
(72) Erfinder: MEIERHANS, Daniel, CH-5643 Sins (CH); OSMANBASIC, Faruk, CH-5643 Sins (CH); STÄHLI, Julian, CH-6003 Luzern (CH); INFANGER, Kurt, CH-6312 Stelnhause (CH); ROTHENFLUH, Roland, CH-6012 Obernau (CH)
(86) Internationale Anmeldenummer: PCT/EP2013/052734
(87) Internationale Veröffentlichungsnummer: WO 2013/120824

(56) Entgegenhaltungen:
- EP-A1- 1 433 736
- EP-A1- 2 399 858
- US-A1- 2002 117 357

## Beschreibung

Die vorliegende Erfindung betrifft ein Bremssystem eines Aufzuges, einer Fahrtreppe oder eines Fahrsteiges. Das Bremssystem beinhaltet eine Bremsvorrichtung mit mindestens einer Bremsbacke. Die Bremsbacke weist eine Wirkfläche auf, die während eines Bremseinsatzes gegen eine relativ zur Wirkfläche sich bewegende oder bewegbare Reibfläche eines Gegenstücks gepresst wird. Solche Bremssysteme können als Betriebsbremse (Backenbremse, Scheibenbremse, Seilbremse) oder als Sicherheitsbremse (Fangbremse) eingesetzt werden.

Betriebsbremsen dienen dem Halten einer Aufzugskabine eines Aufzuges oder dem Halten eines Stufenbandes einer Fahrtreppe in einer bestimmten Position. Selbstverständlich können sie auch zur Verzögerung einer bewegten Aufzugkabine oder eines bewegten Stufenbandes verwendet werden. In Notfällen wie beispielsweise bei einem Stromausfall, sind die Bremssysteme so ausgelegt, dass sie mit maximaler Bremskraft bremsen. Die maximale Bremskraft ist in den einschlägigen Normen festgelegt. Üblicherweise sind Betriebsbremsen elektromechanische Bremssysteme. Deren mindestens eine Bremsbacke wird mittels Federelementen gegen die abzubremsende Reibfläche einer Bremsscheibe, einer Bremstrommel oder eines Tragmittels (Seil oder Riemen) gepresst. Zum Lüften der Bremse wird ein Elektromagnet eingesetzt der geeignet ist, die Federkraft der Federelemente zu überwinden. Die vorangehenden Ausführungen gelten sinngemäß auch für Fahrsteige mit einem Palettenband.

Auch wenn mit einer konstanten Federkraft die Bremsbacke mit ihrer Wirkfläche gegen die Reibfläche gepresst wird, verändert sich die daraus resultierende Reibung und damit die Verzögerung während des Bremsvorganges erheblich. Einflüsse wie die Temperatur während des Bremseinsatzes, die Verschmutzung der Wirkfläche und der Reibfläche, Veränderungen in deren Oberfläche und im Gefüge durch vorangegangene Bremseinsätze und dergleichen mehr, führen zu einer stark schwankenden Bremsleistung. Dies führt zu einem unbefriedigenden Bremsverhalten, welches durch die gewählte Einstellung der Bremse immer ein Kompromiss zwischen der Bandbreite des zu erreichenden Bremswegs und der maximalen zumutbaren Belastung des Benutzers darstellt.

Um diesem Nachteil Rechnung zu tragen, wird in der EP 2 399 858 A1 eine elektromechanische Betriebsbremse offenbart, deren Elektromagnet während des Bremsvorgangs geregelt an Spannung gelegt wird. Der Elektromagnet wirkt dadurch der Federkraft des Federelements entgegen, wodurch die Reibung beziehungsweise die Reibungsleistung pro Zeiteinheit zwischen der Wirkfläche und der Reibfläche beeinflussbar ist. Ein geregelter Elektromagnet erfordert aber einen hohen Energieaufwand und eine teure Regeleinrichtung, die die hohe Spannung und/oder den hohen Strom regeln kann.

Sicherheitsbremsen werden nur in Notfällen ausgelöst und haben die Aufgabe, bewegte Komponenten wie eine Aufzugskabine, ein Gegengewicht, ein Stufenband oder ein Palettenband so rasch wie möglich festzusetzen. Sicherheitsbremsen können an der Aufzugkabine und/oder am Gegengewicht angeordnet sein oder auf ein Tragmittel einwirken, welches die Aufzugkabine mit dem Gegengewicht verbindet. Die Auslösung eines Bremsvorganges erfolgt durch ein elektrisches oder mechanisches Signal eines Geschwindigkeitsbegrenzers. In den durch die Gesetzgeber verabschiedeten Aufzugsnormen sind für Bremsvorgänge Verzögerungswerte beziehungsweise negative Beschleunigungswerte einer Aufzugkabine festgelegt, die nicht überschritten werden dürfen. Üblicherweise treten zwischen der Reibfläche und der Wirkfläche kurz vor dem Übergang von einer Gleitreibung in eine Haftreibung sehr hohe negative Beschleunigungswerte auf. Die negative Beschleunigungskurve verläuft in der Regel in ungünstiger Weise progressiv. Wesentlich angenehmer würde sich ein konstanter Verzögerungswert von beispielsweise -3m/s² anfühlen.

Zur Beherrschung der Reibung und damit zur Beherrschung einer kontrollierten Verzögerung sind verschiedene Lösungen bekannt, die eine geeignete Ausgestaltung der Reibungspartner betreffen. In der EP 1 433 736 A1 wird ein Bremssystem offenbart, dessen Bremsbacke eine Bremsschicht aus unterschiedlichen Materialien aufweist. Beim Bremsvorgang werden die unterschiedlichen Eigenschaften der Materialien zeitgleich genutzt. Dadurch können zwar stick-slip Effekte reduziert werden, die mit einer konstanten Federkraft mit ihrer Wirkfläche gegen die Reibfläche gepresste Bremsbacke erzeugt aber trotzdem eine sich während des Bremsvorganges erheblich verändernde Reibung beziehungsweise Verzögerung.

Ein anderes Bremssystem nach dem Stand der Technik ist aus US2002117357 bekannt.

Es ist daher die Aufgabe der Erfindung ein Bremssystem vorzuschlagen, welches kostengünstig ist und welches die im Bremsfall zwischen der Wirkfläche und der Reibfläche vorhandene Reibung beherrschbar macht.

Diese Aufgabe wird durch ein Bremssystem eines Aufzuges, einer Fahrtreppe oder eines Fahrsteiges, gelöst, welches Bremssystem eine Bremsvorrichtung mit mindestens einer Bremsbacke beinhaltet. Die Bremsbacke weist eine Wirkfläche auf, die während eines Bremseinsatzes gegen eine relativ zur Wirkfläche sich bewegende oder bewegbare Reibfläche eines Gegenstücks gepresst ist. Das Bremssystem weist ferner eine Zuführvorrichtung auf, die durch eine Fluidquelle gespeist ist. Mittels der Zuführvorrichtung kann ein Fluid zwischen die Wirkfläche der Bremsbacke und der ihr zugewandten Reibfläche zugeführt werden. Durch die Zuführung des Fluides ist die Reibung zwischen der Wirkfläche und der Reibfläche beeinflussbar.

Das Merkmal "Reibung" in der vorliegenden Schrift umfasst die äusseren Reibungsarten zwischen sich berührenden Grenzflächen von Festkörpern, die innere Reibung von Fluiden sowie die Mischreibungsarten. Zu den äusseren Reibungsarten gehören die Haftreibung, die Gleitreibung, die Rollreibung, die Wälzreibung, die Bohrreibung und die Seilreibung. Neben der Bewegung der Teilchen in einem Stoff beschreibt die innere Reibung auch den Reibungswiderstand von Körpern, die sich in Fluiden bewegen. Bei der äusseren Reibung berühren sich die aufeinander gleitenden Flächen. Dabei werden Oberflächenerhöhungen eingeebnet (Abrieb oder Verschleiß). Die äussere Reibung tritt beispielsweise dann auf, wenn kein Schmierstoff verwendet wird oder die Schmierung versagt. Die Mischreibung kann bei unzureichender Schmierung oder zu Beginn der Bewegung zweier Reibpartner mit Schmierung auftreten. Dabei berühren sich die Gleitflächen punktuell. Reine innere Reibung, auch als Fluidreibung bezeichnet, tritt dann auf, wenn sich zwischen den Gleitflächen ein permanenter Schmierfilm bildet. Typische Schmierstoffe sind Fluide wie Öle, Wasser aber auch Gase. Die Gleitflächen sind bei reiner Fluidreibung vollständig voneinander getrennt.

Während eines Bremseinsatzes wird kinetische Energie über einen bestimmten Zeitabschnitt in Wärme umgewandelt. Um beispielsweise eine konstante Verzögerung zu erreichen, muss die Reibung zwischen der Reibfläche und der Wirkfläche gegen das Ende des Bremseinsatzes hin reduziert werden. Durch die Zuführung von Fluid können die Anteile der äusseren Reibung und der Fluidreibung in der zwischen der Reibfläche und der Wirkfläche auftretenden Mischreibung während des gesamten Bremseinsatzes variiert werden.

Auch wenn die Zuführung eines Fluids während des Bremsvorganges zur Minderung der Reibung paradox erscheinen mag, kann durch das vorliegende Bremssystem ein vorgegebener Bremsweg mit einem vorgegebenen Verzögerungsprofil beziehungsweise Geschwindigkeitsprofil sehr genau eingehalten werden. Das vorgeschlagene Bremssystem beeinträchtigt in keiner Weise die Sicherheit, da bei einem Ausfall der Fluidzuführung die Bremse in herkömmlicher Art und Weise wirkt. Dies mindert zwar den Komfort für den Benutzer einer Personenfördereinrichtung während eines Bremsvorganges, gefährdet ihn aber nicht an Leib und Leben. Ferner ermöglicht die Fluidzufuhr eine teilweise Kühlung der Bremsbacke, so dass diese und das Gegenstück eine längere Lebensdauer aufweisen. Zudem ist eine geringere Geräuschentwicklung während des Bremsvorganges zu erwarten.

Das Verzögerungsprofil definiert im Weg / Geschwindigkeitsdiagramm die vorgegebene Abnahme der Geschwindigkeit über den gesamten Bremsweg. Die Verzögerung soll für den in der Aufzugkabine befindenden Benutzer möglichst angenehm sein. Um den Übergang von Gleitreibung zu Haftreibung erträglicher zu machen, kann beispielsweise unmittelbar vor dem Halten eine vorgegebene Menge Fluid zugeführt werden. Besondere Vorteile bietet diese Möglichkeit auch, in der Schlussphase eines Bremsvorganges mit einer Aufzugskabine eine genaue Position anzufahren, beispielsweise das am nächsten zu erreichende Stockwerk. Durch eine genau dosierte Zuführung kann der Bremsweg verlängert werden, bis der Boden der Aufzugkabine mit dem Boden des Stockwerks auf genau gleichem Niveau ist.

Die Zuführvorrichtung kann unterschiedlich ausgestaltet sein. Eine erste Ausführung der Zuführvorrichtung beinhaltet mindestens eine in der Bremsbacke ausgebildete Passage. Die Passage weist einen Eingang und einen in die Wirkfläche mündenden Ausgang auf. Der Eingang ist mit der Fluidquelle verbunden, wobei mit der Fluidquelle ein ausreichender Fluiddruck erzeugbar ist um das Fluid zwischen die gegeneinander gepresste Reibfläche und Wirkfläche zuzuführen. Der erforderliche Fluiddruck ist vom Querschnitt des Ausgangs und von der Kraft abhängig, mit der die Wirkfläche der Bremsbacke gegen die Reibfläche des Gegenstücks gepresst wird.

Ferner kann die Wirkfläche der Bremsbacke Bohrungen und/oder Nuten aufweisen. Diese dienen der Zufuhr von Kühlluft und der Abfuhr von Schmutz und Fluid. Damit das zugeführte Fluid nicht wirkungslos in den Bohrungen und/oder Nuten versickert, kann der Ausgang der mindestens einen Passage zwischen den Bohrungen und/oder Nuten in die Wirkfläche münden.

Wie weiter oben ausgeführt, kann die Bremsbacke eine oder mehrere Passagen aufweisen. Um bei Vorhandensein mehrerer Passagen die Anzahl Versorgungsleitungen zwischen der Fluidquelle und der Bremsbacke auf ein Minimum zu beschränken, kann die Bremsbacke mindestens zwei in ihre Wirkfläche mündende Passagen aufweisen, deren Eingänge durch eine gemeinsame Versorgungsleitung mit der Fluidquelle verbunden sind.

In einer zweiten Ausführung kann die Zuführvorrichtung mindestens einen an der Bremsbacke ausgebildeten Einlaufbereich und mindestens eine auf diesen Einlaufbereich gerichtete Mündung einer Zuführleitung aufweisen. Die Zuführleitung ist mit der Fluidquelle verbunden. Ein Fluid der Fluidquelle ist durch die Mündung in den Einlaufbereich zuführbar. Der Einlaufbereich weist eine geeignete Form, beispielsweise eine gekrümmte Fläche auf. Infolge einer relativen Bewegung der Reibfläche zur Wirkfläche kann das Fluid, ausgehend vom Einlaufbereich und einen Fluidkeil zwischen der Wirkfläche und der Reibfläche bildend, zwischen die gegeneinander gepresste Reibfläche und Wirkfläche gelangen.

Die Fluidquelle kann eine Fördervorrichtung, insbesondere eine Pumpe sein, die das Fluid aus einem Vorratsbehälter ansaugt und zur Zuführvorrichtung fördert. Selbstverständlich ist auch ein Druckzylinder geeignet, dessen federgespannter Kolben auf ein im Zylinderraum eingeschlossenes Fluid drückt. Ferner kann die Fluidquelle einen Gasdruckbehälter aufweisen, der entweder das Fluid enthält oder den notwendigen Förderdruck in einem druckfesten Fluidtank zur Verfügung stellt. Selbstverständlich kann das Bremssystem zur Regulierung der Zuführung des Fluides ein Steuerventil und eine auf das Steuerventil wirkende Steuerung aufweisen. Um eine möglichst präzise Zuführung zu gewährleisten, wird das Steuerventil vorzugsweise in der Zuführvorrichtung unmittelbar vor der Mündung der Zuführleitung beziehungsweise dem Ausgang der Passage angeordnet. Selbstverständlich kann das Steuerventil auch in der Fluidquelle angeordnet sein.

Ferner kann das Bremssystem einen Sensor aufweisen, durch welchen eine Änderung der relativen Bewegung der Reibfläche zur Wirkfläche erfassbar ist. Dieser Sensor kann ein Beschleunigungssensor, ein Radarsensor, ein Geschwindigkeitsmesssensor und dergleichen mehr sein. Das Ausgangssignal des Sensors kann an die Steuerung übertragen werden. Die Steuerung kann dieses Ausgangssignal unter Berücksichtigung gespeicherter Betriebsdaten zur Berechnung mindestens eines idealen Zeitabschnitts der Zuführung und die zu diesem Zeitabschnitt zu fördernde Masse des Fluids verwenden, um beispielsweise das weiter oben erwähnte, vorgegebene Verzögerungsprofil abzufahren.

Um das vorgegebene Verzögerungsprofil abzufahren, ist es möglicherweise notwendig, während mehreren, nacheinander folgenden Zeitabschnitten Fluid zwischen die Wirkfläche und die Reibfläche zuzuführen. Selbstverständlich kann durch die Steuersignale der Steuerung das Steuerventil auch einen pulsierenden Fluidstrom erzeugen.

Im vorliegenden Bremssystem können verschiedene Fluida eingesetzt werden. Verwendbar sind technische Gase wie beispielsweise Pressluft oder Stickstoff. Das Fluid kann aber auch eine Flüssigkeit, beispielsweise ein Mineralöl mit oder ohne Additive sein. In Versuchen wurden beispielsweise Mineralöle ohne Hochdruckadditive wie Verschleißminderer, Reibungsminderer und/oder Fressschutzadditive erfolgreich eingesetzt. Das Mineralöl kann ferner Additive wie Flamminhibitoren aufweisen, um im Bremsfall eine Entzündung des zugeführten Fluids zu verhindern oder einzudämmen. Selbstverständlich ist auch der Einsatz von Wasser möglich, wenn dadurch an den Bauteilen des Aufzugs, der Fahrtreppe oder des Fahrsteiges keine Korrosionsschäden verursacht werden. Auch feinkörnige Feststoffe wie beispielsweise Quarzsand können als Fluid eingesetzt werden. Der Einsatz eines Mineralöls ohne Additive wie Verschleißminderer, Reibungsminderer und/oder Fressschutzadditive ist besonders vorteilhaft, da das Gegenstück, beispielsweise eine Führungsschiene eines Aufzugs infolge eines Bremseinsatzes neu eingeölt wird. Ein Mineralöl ohne die erwähnten Additive weist den Vorteil auf, dass der Flüssigkeitsfilm zwischen der Wirkfläche und der Reibfläche augenblicklich zusammenbricht, wenn die Zufuhr frischen Fluids unterbrochen wird.

Wie bereits weiter oben erwähnt, kann das Bremssystem eine Betriebsbremse sein, wobei deren Gegenstück eine Bremstrommel oder eine Bremsscheibe sein kann. Bei Betriebsbremsen muss dafür gesorgt werden, dass das benutzte Fluid aus dem Bereich der Betriebsbremse abgeführt wird, so dass sich dieses nicht im Bereich der Wirkfläche und Reibfläche staut und das Bremsverhalten negativ beeinflusst.

Das Bremssystem kann aber auch eine Sicherheitsbremse beziehungsweise Fangvorrichtung oder Fangbremse sein, die an einem Gegenstück bremsen kann. Das Gegenstück kann eine Führungsschiene oder eine gesondert angeordnete Bremsschiene sein.

Die bereits vorhandene Fluidquelle kann auch für weitere, bremsunterstützende Aufgaben Fluid abgeben. Aufzüge, Fahrtreppen und Fahrsteige werden überall auf der Welt eingesetzt und sind daher den unterschiedlichsten Betriebsbedingungen unterworfen. Insbesondere Staub und Schmutz können am Gegenstück anhaften und die Leistungsfähigkeit des Bremssystems massiv beeinträchtigen. Um den Schmutz zu entfernen, kann das Bremssystem mindestens eine fluidgespeiste Reinigungsvorrichtung aufweisen, welche der Bremsbacke vorgelagert ist und der Reinigung des Gegenstücks dient. Selbstverständlich kann die Reinigungsvorrichtung auch eine eigene Fluidquelle aufweisen.

Zum Bremsen einer Aufzugskabine eines Aufzuges, eines Stufenbandes einer Fahrtreppe oder eines Palettenbandes eines Fahrsteiges mit dem vorangehend beschriebenen Bremssystem können verschiedene Bremsverfahren durchgeführt werden.

Grundsätzlich umfasst jedes dieser Verfahren den Schritt, dass während eines Bremseinsatzes des Bremssystems durch die Zuführvorrichtung zumindest einmal eine vorgegebene Menge eines Fluides über die Passage der Bremsbacke oder über die Mündung und den Einlaufbereich zwischen die Wirkfläche und die Reibfläche zugeführt wird, um die Reibung zwischen der Wirkfläche der Bremsbacke und der ihr zugewandten Reibfläche zu beeinflussen. Dieser eine Schritt erfordert noch nicht zwingend eine Steuerung, die vorgegebene Menge kann auch durch mechanische Mittel wie beispielsweise durch das Zylindervolumen einer Kolbenpumpe bemessen werden.

Selbstverständlich kann das vorangehend beschriebene Verfahren durch weitere Verfahrensschritte ergänzt werden, insbesondere dann, wenn das Bremssystem eine Steuerung mit mindestens einer Recheneinheit und mit mindestens einer Speichereinheit aufweist. In der Speichereinheit können in einem weiteren Schritt zeitabhängige Kenndaten eines Bremseinsatzes wie Temperatur, Fluiddruck, Verzögerungswerte und/oder Verzögerungsprofile mit einer Zeitinformation abgespeichert werden. Aus diesen Kenndaten können anschliessend Steuergrößen für den nächsten Bremseinsatz errechnet werden.

Der Aufbau eines Bremssystems sowie dessen Anwendungsmöglichkeiten in einem Aufzug, in einer Fahrtreppe oder in einem Fahrsteig werden im Folgenden mit Bezugnahme auf die Zeichnungen näher erläutert. Darin zeigen:
- Figur 1:: schematisch im Aufriss ein als Fangbremse ausgestaltetes Bremssystem in einer ersten Ausführung, wobei das Bremssystem eine Bremsvorrichtung, eine Fluidquelle und einer Zuführvorrichtung aufweist und die Bremsvorrichtung eine Bremsbacke und ein elastisch gelagertes Druckstück beinhaltet;
- Figur 2:: schematisch im Aufriss ein als Fangbremse ausgestaltetes Bremssystem in einer zweiten Ausführung, wobei sich die zweite Ausführung von der in Figur 1 dargestellten ersten Ausführung im Wesentlichen in der Zuführungsvorrichtung unterscheidet;
- Figur 3:: im Aufriss ein als Fangbremse ausgestaltetes Bremssystem in einer dritten Ausführung, wobei das Bremssystem eine Bremsvorrichtung, eine Fluidquelle und eine Zuführvorrichtung aufweist und die Bremsvorrichtung zwei Bremsbacken in symmetrischer Anordnung beinhaltet;
- Figur 4:: schematisch im Aufriss ein Aufzug mit einer Aufzugkabine, mit einem Gegengewicht, mit einer Antriebseinheit und mit einem Tragmittel, welches die Kabine mit dem Gegengewicht verbindet und über eine Treibscheibe der Antriebseinheit geführt ist, wobei die Antriebseinheit ein als Betriebsbremse ausgestaltetes Bremssystem mit einer Zuführvorrichtung beinhaltet und die Aufzugkabine zwei als Fangbremse ausgestaltete Bremssysteme mit einer Zuführvorrichtung aufweist;
- Figur 5:: schematisch im Aufriss eine Fahrtreppe oder ein Fahrsteig mit einem Stufenband beziehungsweise Palettenband, mit einem Handlauf und mit einer Antriebseinheit, wobei die Antriebseinheit ein als Betriebsbremse ausgestaltetes Bremssystem mit einer Zuführvorrichtung beinhaltet.

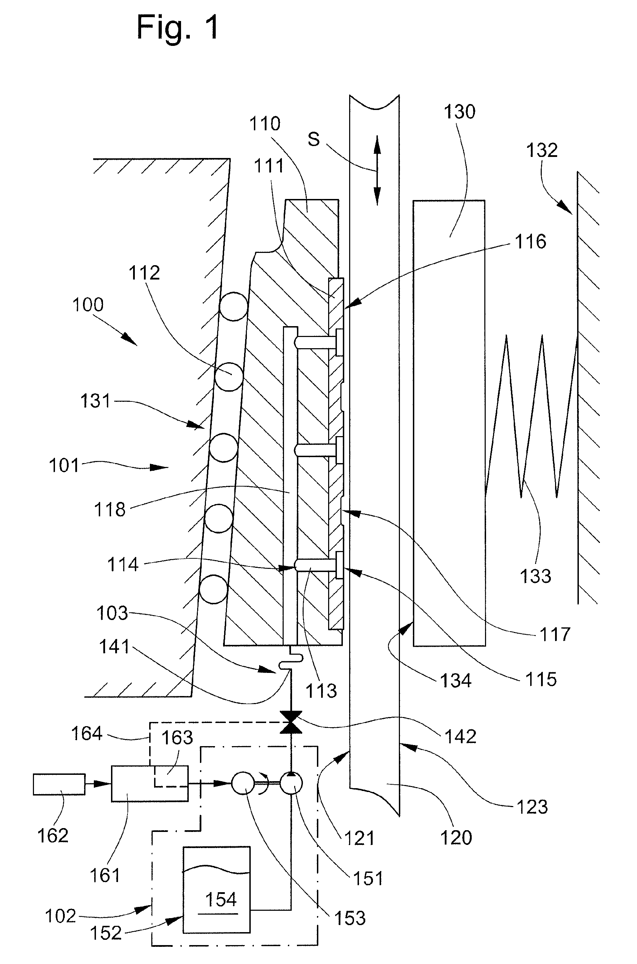

Figur 1 zeigt schematisch und in geschnittenem Aufriss ein als Fangbremse ausgestaltetes Bremssystem 100 in einer ersten Ausführung. Das Bremssystem 100 weist eine Bremsvorrichtung 101 auf, die ein Bremsgehäuse, eine im Bremsgehäuse linear verschiebbar gelagerte Bremsbacke 111 und ein im Bremsgehäuse elastisch gelagertes Druckstück 130 beinhaltet. Zwischen der Bremsbacke 111 und dem Druckstück 130 ist ein Gegenstück 120 angeordnet. Während eines Bremseinsatzes der Bremsvorrichtung 101 liegen das Druckstück 130 und die Bremsbacke 111 am Gegenstück 120 an. Wenn kein Bremseinsatz erfolgt, ist zwischen dem Gegenstück 120 und der Bremsbacke 111 einerseits und zwischen dem Gegenstück 120 und dem Druckstück 130 andererseits, ausreichend Spiel vorhanden, wie dies in der Figur 1 dargestellt ist.

Vom Bremsgehäuse sind der besseren Übersicht wegen nur eine zum Gegenstück 120 schräg angeordnete Bremsgehäusewand 131 und eine zum Gegenstück 120 parallel angeordnete Bremsgehäusewand 132 dargestellt. Die beiden Gehäusewände 131, 132 sind fest miteinander verbunden und das Bremsgehäuse ist an einer nicht dargestellten Aufzugkabine befestigt, die parallel und relativ zum Gegenstück 120 in der angegebenen Pfeilrichtung S bewegbar ist. Mittels einer Keilführung 112 ist ein Keilkörper 110 an der ersten Bremsgehäusewand 131 linear geführt. Die Keilführung 112 ist beispielhaft als Rollenführung dargestellt, selbstverständlich können auch Gleitführungen verwendet werden. Am Keilkörper 110 ist die Bremsbacke 111 befestigt, deren Wirkfläche 116 gegen eine Reibfläche 121 des Gegenstücks 120 gerichtet ist. Das Gegenstück 120 kann eine Führungsschiene der nicht dargestellten Aufzugkabine sein. Es ist aber auch denkbar, dass das Gegenstück 120 eine im Aufzugschacht gesondert angeordnete Bremsschiene ist.

Durch eine lineare Verschiebung des Keilkörpers 110 und der Bremsbacke 111 entlang der schrägen Bremsgehäusewand 131 erfolgt eine Verschiebung der Wirkfläche 116 zur Reibfläche 121 hin, bis sich diese berühren. Aufgrund der Keilwirkung des Keilkörpers 110 wird die Wirkfläche 116 mit hoher Anpresskraft gegen die Reibfläche 121 gepresst und erzeugt bei einer relativen Bewegung der Wirkfläche 116 zur Reibfläche 121 eine Bremskraft. Wenn keine relative Bewegung vorhanden ist, wirkt eine Haltekraft, die die Masse der Aufzugkabine halten kann. Damit das Gegenstück 120 infolge der einwirkenden Anpresskraft nur begrenzt weichen kann, wirkt der Anpresskraft das mit einem Federelement 133 elastisch gelagerte Druckstück 130 entgegen. Ferner wird durch das Federelement 133 die Anpresskraft begrenzt.

Die Bremsbacke kann wie in der Figur 1 dargestellt, eine Wirkfläche 116 mit Nuten 117 aufweisen. Selbstverständlich können auch Bohrungen an Stelle der Nuten 117 vorhanden sein. Die Bremsbacke 111 weist ferner mehrere Passagen 113 auf, die sich in den Keilkörper 110 hinein erstrecken. Die Passagen 113 weisen Ausgänge 115 auf, die in die Wirkfläche 116 münden. Da sich die Passagen 113 in den Keilkörper 110 hinein erstrecken, sind deren Eingänge 114 auch im Keilkörper 110 angeordnet. Die Eingänge 114 sind mittels einer gemeinsamen Versorgungsleitung 118 miteinander verbunden.

Die Versorgungsleitung 118, welche Teil einer Zuführvorrichtung 103 ist, ist ebenfalls im Keilkörper 110 ausgebildet. Die Zuführvorrichtung 103 weist ferner eine flexible Leitung 141 und ein Ventil 142 auf, wobei die flexible Leitung 141 die Versorgungsleitung 118 mit dem Ventil 142 verbindet. Das Ventil 142 ist mit einer Fluidquelle 102 verbunden, die im Wesentlichen eine Pumpe 151, einen Fluidvorratsbehälter 152 und einen Pumpenmotor 153 umfasst, der die Pumpe 151 antreibt.

Im ersten Ausführungsbeispiel ist das Fluid 154 eine Flüssigkeit, beispielsweise ein Mineralöl ohne Additive wie Verschleißminderer, Reibungsminderer und/oder Fressschutzadditive. Solange dieses Mineralöl zwischen die Wirkfläche 116 und die Reibfläche 121 zugeführt wird, ist während eines Bremseinsatzes trotz der hohen Anpresskraft zumindest zwischen einem Teil der Reibfläche 121 und Wirkfläche 116 ein Flüssigkeitsfilm vorhanden. Sobald die Zuführung gestoppt wird, bricht der Flüssigkeitsfilm augenblicklich zusammen und es wirkt eine Bremskraft oder eine Haltekraft.

Das elastisch gelagerte Druckstück 130 kann eine Gleitfläche 134 aufweisen, die während eines Bremseinsatzes auf einer der Reibfläche 121 abgewandten und zu dieser parallelen Schienenfläche 123 des Gegenstücks 120 gleitend abstützt. Selbstverständlich kann das elastisch gelagerte Druckstück 130 auch eine Bremsbacke aufweisen. Diese Bremsbacke kann analog der Bremsbacke 111 ausgestaltet sein und mittels einer Zuführvorrichtung mit Fluid versorgt werden. Sie kann aber auch wie die bekannten Bremsbacken aufgebaut sein, ohne dass Fluid zuführbar ist.

Um die Zuführung des Fluids 154 zu steuern, weist das Bremssystem 100 ferner eine Steuerung 161 auf, die über eine Signalleitung 164 mit dem Ventil 142 verbunden ist und dieses steuert. Die Zuführung von Fluid 154 kann nach einem festen Ablauf beziehungsweise Bremsverfahren erfolgen, dessen Schritte in einem Speichermedium 163 der Steuerung 161 gespeichert sind. Da das Verhalten des Bremssystems 100 bei einem Bremseinsatz von äusseren Einflüssen wie der Umgebungstemperatur, der Luftfeuchtigkeit, von Staub und Schmutz in der Umgebungsluft und dergleichen abhängig ist, ist weist das Bremssystem 100 vorzugsweise mindestens einen Sensor 162 oder zumindest einen Anschluss für einen Sensor 162 auf, der Messwerte eines Bremseinsatzes erfassen und an die Steuerung 161 weiterleiten kann. Solche Messwerte können die Verzögerung der Aufzugkabine, die Temperatur der Wirkfläche, der Bremsweg eines vorangegangenen Bremseinsatzes, die Position der Aufzugkabine zu Beginn des Bremseinsatzes und dergleichen sein. Diese Messwerte können zur späteren Verwendung mit einer Zeitinformation versehen und im Speichermedium gespeichert werden. Aus diesen Messwerten kann die Steuerung die optimale Zuführung (Zeitpunkt und Fluidmenge) errechnen und Steuersignale zur Steuerung des Ventils 142 generieren.

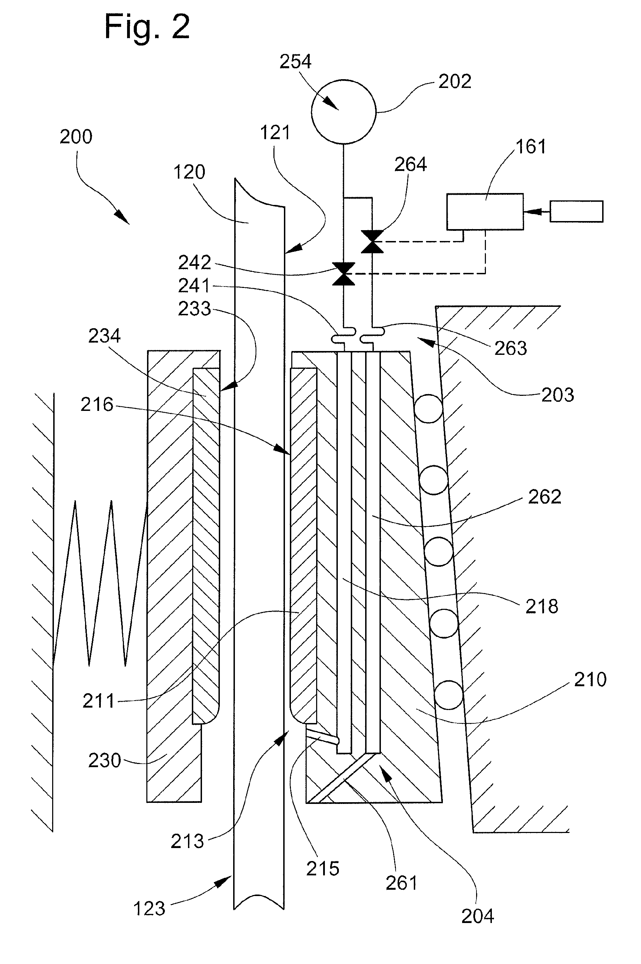

Figur 2 zeigt schematisch in geschnittenem Aufriss ein als Fangbremse ausgestaltetes Bremssystem 200 in einer zweiten Ausführung. Die zweite Ausführung unterscheidet sich von der in Figur 1 dargestellten, ersten Ausführung im Wesentlichen in der Ausgestaltung der Zuführungsvorrichtung 203. Auf die erneute Beschreibung von in der Figur 1 beschriebenen Teilen, welche auch dieselben Bezugszeichen aufweisen, wird deshalb verzichtet.

Die in Figur 2 dargestellte Zuführvorrichtung 203 erfordert einen anderen Keilkörper 210 und eine andere Bremsbacke 211. An der Bremsbacke 211 ist ein Einlaufbereich 213 ausgebildet, der ebenfalls Teil der Zuführvorrichtung 203 ist. Der Einlaufbereich 213 weist eine geeignete Form, beispielsweise eine gekrümmte Fläche auf, die im Kantenbereich der Bremsbacke 211 angeordnet ist und in deren Wirkfläche 216 übergeht. Infolge einer relativen Bewegung der Reibfläche 121 zur Wirkfläche 216 kann ein Fluid 254, ausgehend vom Einlaufbereich 213, einen Fluidkeil zwischen der Wirkfläche 216 und der Reibfläche 121 bildend, zwischen die gegeneinander gepresste Reibfläche 121 und Wirkfläche 216 gelangen.

Im Keilkörper 210 ist eine Zuführleitung 218 ausgebildet, an die eine erste flexible Leitung 241 anschliesst und die Zuführleitung 218 mit einem ersten Ventil 242 verbindet. Die Zuführleitung 218, die erste flexible Leitung 241 und das erste Ventil 242 sind ebenfalls Teile der Zuführvorrichtung 203. Die Zuführleitung 218 weist eine Mündung 215 auf, die gegen den Einlaufbereich 213 gerichtet ist. Vorzugsweise weist die Mündung 215 einen rechteckigen Querschnitt auf, dessen Breite sich orthogonal zur Zeichnungsebene erstreckt und der Breite der Bremsbacke 211 entspricht. Das Fluid 254, im vorliegenden Beispiel Pressluft, ist in einem als Fluidquelle 202 dienenden Gasdruckbehälter gespeichert. Beim Öffnen des ersten Ventils 242 strömt Fluid 254 durch die erste flexible Leitung 241 in die Zuführleitung 218 und aus dessen Mündung 215 hin zum Einlaufbereich 213. Sobald das erste Ventil 242 geschlossen wird, bricht der Fluidkeil zwischen der Reibfläche 121 und der Wirkfläche 216 zusammen und das Bremssystem 200 bremst mit der maximalen Bremskraft.

Das Bremssystem 200 verfügt ferner über eine Reinigungsvorrichtung 204, mit der die Reibfläche 121 des Gegenstücks 120 von Öl, Staub und Schmutz gereinigt werden kann. Die Reinigungsvorrichtung 204 weist eine Düse 261 mit rechteckigem Düsenquerschnitt auf. Die Breite des Düsenquerschnitts erstreckt sich ebenfalls orthogonal zur Zeichnungsebene und entspricht der Breite der Bremsbacke 211 und damit der Breite der Reibfläche 121. Die Reinigungsvorrichtung 204 weist ferner eine im Keilkörper 210 ausgebildete Versorgungsleitung 262 und eine an die Versorgungsleitung 262 anschliessende zweite flexible Leitung 263 auf. Die zweite flexible Leitung 263 schliesst an ein zweites Ventil 264 an, welches mit der Fluidquelle 202 verbunden ist. Sobald das zweite Ventil 264 geöffnet wird, strömt Pressluft durch die zweite flexible Leitung 263 und die Versorgungsleitung 262 in die Düse 261. Der aus der Düse 261 ausströmende Pressluftstrom entfernt wie eine Spachtelklinge Öl, Schmutz und Staub von der Reibfläche 121. Sowohl das erste Ventil 242 als auch das zweite Ventil 264 sind mit der Steuerung 161 verbunden.

Auch das Bremssystem der zweiten Ausführung weist ein Druckstück 230 auf. Dieses beinhaltet eine Druckstück-Bremsbacke 234 mit einer Druckstück-Bremsbackenwirkfläche 233 auf. Wie dargestellt, weist die Druckstück-Bremsbacke 234 keine Zuführvorrichtung auf. Selbstverständlich kann aber auch diese mittels einer Zuführvorrichtung mit der Fluidquelle 102 verbunden sein, um Fluid zwischen die Druckstück-Bremsbackenwirkfläche 233 und die Schienenfläche 123 des Gegenstücks 120 zuzuführen. Es kann aber auch nur eine Druckstück-Reinigungsvorrichtung vorhanden sein, die analog der Reinigungsvorrichtung 204 ausgestaltet ist und die Schienenfläche 123 reinigt.

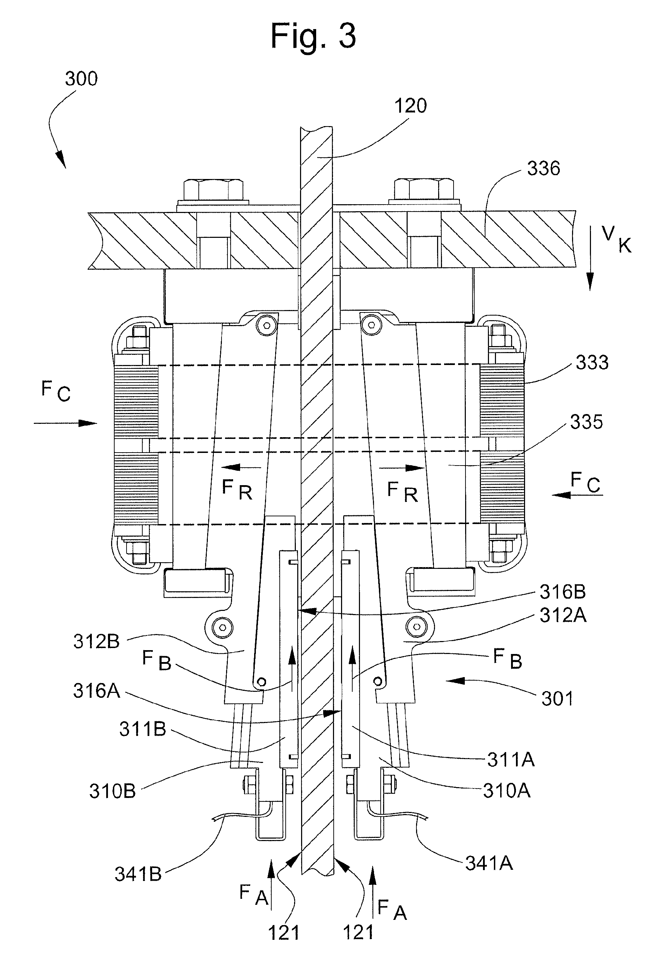

Figur 3 zeigt im Aufriss ein als Fangbremse ausgestaltetes Bremssystem 300 in einer dritten Ausführung, wobei das Bremssystem 300 eine Bremsvorrichtung 301 aufweist, die in symmetrischer Anordnung zwei Bremsbacken 311A, 311B beinhaltet. Beide Bremsbacken 311A, 311B sind mit je einem Keilkörper 310A, 310B fest verbunden. Die Keilkörper 310A, 310B sind mittels Keilführungen 312A, 312B linear geführt. Die Keilführungen 312A, 312B sind durch ein C- förmig ausgestaltetes Federpaket 333 miteinander verbunden, wobei der Mittelteil des Federpakets 333 durch die Keilführungen 312A, 312B verdeckt ist. Das Federpaket 333 ist in einem Käfig 335 gehalten und der Käfig 335 an einem Träger 336 einer nicht weiter dargestellten Aufzugkabine festgeschraubt.

Wenn die Aufzugkabine in der Bewegungsrichtung V_{K} eine zu hohe Geschwindigkeit relativ zum Gegenstück 120 aufweist, wird durch eine nicht dargestellte Überwachungseinrichtung je eine Auslösekraft F_{A} auf die Keilkörper 310A, 310B ausgeübt, wodurch diese und deren Bremsbacken 311A, 311B aufgrund der Keilform zum Gegenstück 120 hin zugestellt werden. Die während eines Bremseinsatzes zwischen den Reibflächen 121 und den Wirkflächen 316A, 316B, der Bremsbacken 311 A, 311 B wirkende Bremskraft F_{B} weist dieselbe Richtung wie die Auslösekraft F_{A} auf und zieht die Keilkörper 310A, 310B und Bremsbacken 311A, 311B noch stärker gegen das Gegenstück 120 hin. Dadurch treten orthogonal zur Bewegungsrichtung V_{K} der Aufzugkabine Reaktionskräfte F_{R} an den Keilführungen 312A, 312B auf, die das Federpaket 333 leicht spreizen. Die Reaktionskräfte F_{R} werden durch die Federkraft F_{C} des Federpakets 333 abgestützt. Die Bremsbacken 311A, 311B und Keilkörper 310A, 310B können analog der in den Figuren 1 oder 2 dargestellten Bremsbacke und Keilkörper ausgestaltet sein. Die Zuführung des Fluids in die Keilkörper 310A, 310B erfolgt über die angedeuteten flexiblen Leitungen 341A, 341B, welche an einer nicht dargestellten Fluidquelle angeschlossen sind.

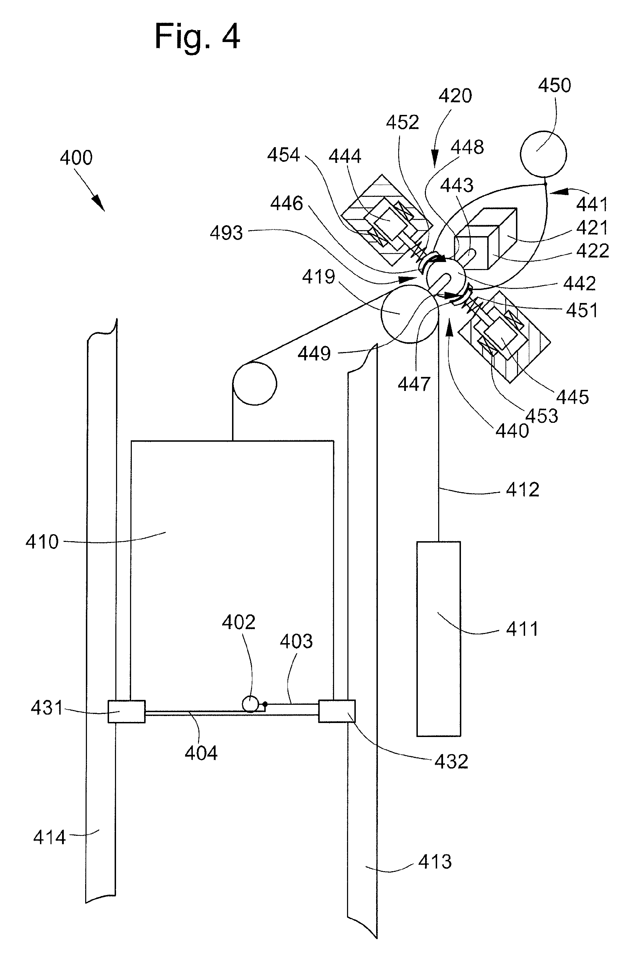

Figur 4 zeigt schematisch im Aufriss ein Aufzug 400. Dieser weist eine Aufzugkabine 410, ein Gegengewicht 411, eine Antriebseinheit 420 und ein Tragmittel 412 auf. Das Tragmittel 412 verbindet die Kabine 410 mit dem Gegengewicht 411 und ist über eine Treibscheibe 419 der Antriebseinheit 420 geführt. Die Aufzugkabine 410 ist an Führungsschienen 413, 414 geführt. Im Bodenbereich der Aufzugkabine 410 sind ferner zwei als Fangbremsen 431, 432 ausgestaltete Bremssysteme angeordnet. Diese können einen Aufbau aufweisen, der einem der in den Figuren 1 bis 3 dargestellten Fangbremsen entspricht.

Die in der Figur 4 nicht dargestellten Bremsbacken der Fangbremsen 431, 432 greifen während eines Bremseinsatzes an den als Gegenstück dienenden Führungsschienen 413, 414 an. Wie schematisch angedeutet, ist im Bodenbereich der Aufzugkabine 410 eine Fluidquelle 402 angeordnet, die durch Leitungen 403, 404 mit den Fangbremsen 431, 432 verbunden ist und diesen während eines Bremseinsatzes Fluid zuführen kann.

Die Antriebseinheit 420 beinhaltet ferner einen Antriebsmotor 421 mit einem Untersetzungsgetriebe 422 und ein weiteres, als Betriebsbremse 440 ausgestaltetes Bremssystem mit einer Zuführvorrichtung 441. Die Betriebsbremse 440 weist eine Bremstrommel 442 auf, die auf einer Antriebswelle 443 angeordnet ist und welche Antriebswelle 443 die Treibscheibe 419 mit dem Untersetzungsgetriebe 422 und Antriebsmotor 421 verbindet. Die Bremstrommel 442 weist eine an ihrem Umfang angeordnete Reibfläche 493 auf und dient als Gegenstück zweier Bremsbackenkörper 444, 445. Jeder dieser Bremsbackenkörper 444, 445 weist eine Bremsbacke 446, 447 mit einer Wirkfläche 448, 449 auf und wird während eines Bremseinsatzes mittels eines elastischen Elements 451, 452 gegen die Bremstrommel 442 gepresst. Zum Lüften der Betriebsbremse 440 ist jedem linear geführten Bremsbackenkörper 444, 445 ein Elektromagnet 453, 454 zugeordnet, dessen Magnetkraft die Federkraft des elastischen Elements 451, 452 überwinden kann. Solange die Elektromagneten 453, 454 an Spannung liegen, ist die Betriebsbremse 440 wie dargestellt, gelüftet. Sobald die Spannungsversorgung der Elektromagneten 453, 454 unterbrochen wird, fallen die Bremsbackenkörper 444, 445 mit ihren Bremsbacken 446, 447 ein, wobei die Wirkflächen 448, 449 der Bremsbacken 446, 447 an der Reibfläche 493 aufliegen.

Die Zuführvorrichtung 441 der Betriebsbremse 440 wird durch eine Fluidquelle 450 gespeist. Die Zuführvorrichtung 441 und die Bremsbacken 446, 447 können analog den in den Figuren 1 oder 2 dargestellten Ausführungsbeispielen ausgebildet sein, wobei die notwendigen Versorgungsleitungen, Passagen und Zuführleitungen in den Bremsbackenkörpern 444, 445 ausgebildet sind. Ferner sollten die Wirkflächen 448, 449 zumindest teilweise dem Krümmungsradius der Reibfläche 493 angepasst sein, damit sich durch Zuführung eines Fluids ein tragfähiger Fluidfilm zwischen der Reibfläche 493 und den Wirkflächen 448, 449 ausbilden kann. Sofern das verwendete Fluid eine Flüssigkeit ist, kann die Betriebsbremse 440 in einem nicht dargestellten, geschlossenen Bremsgehäuse angeordnet sein, so dass der Innenraum des geschlossenen Bremsgehäuses den Vorratsbehälter bildet.

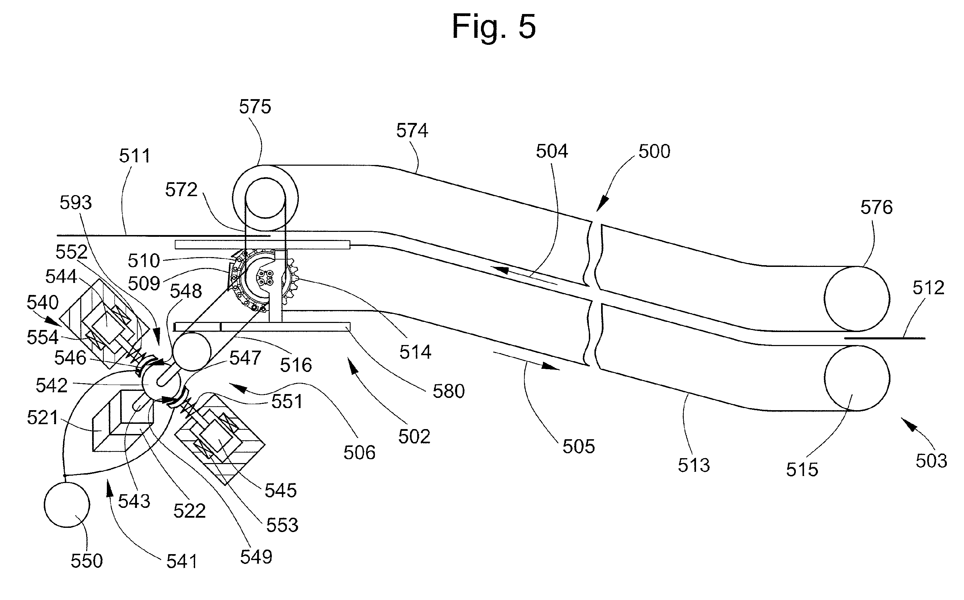

Figur 5 zeigt in schematischer Darstellung die bewegten Hauptkomponenten einer Fahrtreppe oder eines Fahrsteiges 500. Eine Fahrtreppe 500 oder ein Fahrsteig 500 weist einen ersten Umlenkbereich 502 und einen zweiten Umlenkbereich 503 auf, über deren Antrittsplatten 511, 512 die Benutzer die Fahrtreppe 500 oder den Fahrsteig 500 betreten beziehungsweise verlassen. Obwohl nur im ersten Umlenkbereich 502 dargestellt, weisen beide Umlenkbereiche 502, 503 eine Trägerstruktur 580 auf, die in der Gebäudestruktur eines nicht dargestellten Gebäudes ortsfest verankert sind. Zwischen den beiden Umlenkbereichen 502, 503 ist ein Stufenband 513 beziehungsweise Palettenband 513 angeordnet, welches mindestens eine Transportkette 510 und an der Transportkette 510 angeordnete Stufen 509 oder Paletten 509 beinhaltet.

Nachfolgend wird der besseren Lesbarkeit wegen nur noch die Fahrtreppe 500, das Stufenband 513 und Stufen 509 erwähnt, sinngemäß sind aber damit auch der Fahrsteig 500, das Palettenband 513 und Paletten 509 gemeint, da die Erfindung für Fahrtreppen 500 und Fahrsteige 500 gleichermaßen geeignet ist. In jedem Umlenkbereich 502, 503 ist pro vorhandene Transportkette 510 ein Kettenrad 514, 515 drehbar angeordnet. Das Stufenband 513 und demzufolge die Transportkette 510 ist umlaufend ausgestaltet und weist somit einen durch Pfeile dargestellten Vorlauf 504 und einen Rücklauf 505 auf. Die Drehrichtungsangabe des Stufenbandes 513 durch Pfeile ist nur beispielhaft und zeigt die Fahrtreppe 500 im aufwärts fördernden Betriebsmodus. Selbstverständlich kann die Fahrtreppe 500 auch im abwärts fördernden Betriebsmodus betrieben werden. Die Umlenkung des Stufenbandes 513 vom Vorlauf 504 zum Rücklauf 505 beziehungsweise vom Rücklauf 505 zum Vorlauf 504 erfolgt in den Umlenkbereichen 502, 503 durch die Kettenräder 514, 515. Anstelle des Kettenrades 515 im zweiten Umlenkbereich 503 kann auch eine bogenförmige Führung oder ein Umlenkrad vorhanden sein, die das Stufenband 513 sinngemäß umlenkt.

Weitere bewegte Hauptkomponenten sind ein Antriebsmotor 521, ein zwischen dem Antriebsmotor 521 und dem Kettenrad 514 des ersten Umlenkbereichs 502 angeordneter Antriebsstrang 506 und ein mitlaufender Handlauf 574. Auch der Handlauf 574 ist umlaufend ausgestaltet und zwischen zwei Umlenkrädern 575, 576 angeordnet. Das im ersten Umlenkbereich 502 angeordnete Umlenkrad 575 ist mittels eines Handlaufantriebs 572 mit dem Antriebsstrang 506 verbunden. Der Antriebsstrang 506 umfasst ein am Antriebsmotor 521 angeflanschtes Zahnradgetriebe 522 und ein Kettengetriebe 516, so dass die Drehbewegung einer zwischen dem Zahnradgetriebe 522 und dem Kettengetriebe 516 angeordneten Antriebswelle 543 untersetzt auf das Kettenrad 514 des ersten Umlenkbereichs 502 und das Umlenkrad 575 übertragen werden kann. Selbstverständlich kann der Antriebsstrang 506 auch mit dem Kettenrad 515 des zweiten Umlenkbereichs 503 verbunden sein oder beide Umlenkbereiche 502, 503 je einen Antriebsmotor 521 und einen Antriebsstrang 506 aufweisen.

Ferner beinhaltet der Antriebsstrang 506 ein als Betriebsbremse 540 ausgestaltetes Bremssystem mit einer Zuführvorrichtung 541. Die Betriebsbremse 540 weist eine Bremstrommel 542 auf, die auf der Antriebswelle 543 angeordnet ist. Die Bremstrommel 542 weist eine an ihrem Umfang angeordnete Reibfläche 593 auf und dient als Gegenstück zweier Bremsbackenkörper 544, 545. Jeder dieser Bremsbackenkörper 544, 545 weist eine Bremsbacke 546, 547 mit einer Wirkfläche 548, 549 auf und wird während eines Bremseinsatzes mittels eines elastischen Elements 551, 552 gegen die Bremstrommel 542 gepresst. Zum Lüften der Betriebsbremse 540 ist jedem linear geführten Bremsbackenkörper 544, 545 ein Elektromagnet 553, 554 zugeordnet, dessen Magnetkraft die Federkraft des elastischen Elements 551, 552 überwinden kann. Solange die Elektromagneten 553, 554 an Spannung liegen, ist die Betriebsbremse 540 wie dargestellt, gelüftet. Sobald die Spannungsversorgung der Elektromagneten 553, 554 unterbrochen wird, fallen die Bremsbackenkörper 544, 545 mit ihren Bremsbacken 546, 547 ein, wobei die Wirkflächen 548, 549 der Bremsbacken 546, 547 an der Reibfläche 593 aufliegen.

Die Zuführvorrichtung 541 der Betriebsbremse 540 wird durch eine Fluidquelle 550 gespeist. Die Zuführvorrichtung 541 und die Bremsbacken 546, 547 können analog den in den Figuren 1 oder 2 dargestellten Ausführungsbeispielen ausgebildet sein, wobei die notwendigen Versorgungsleitungen, Passagen und Zuführleitungen in den Bremsbackenkörpern 544, 545 ausgebildet sind. Ferner sollten die Wirkflächen 548, 549 zumindest teilweise dem Krümmungsradius der Reibfläche 593 angepasst sein, damit sich durch Zuführung eines Fluids ein tragfähiger Fluidfilm zwischen der Reibfläche 593 und den Wirkflächen 548, 549 ausbilden kann. Sofern das verwendete Fluid eine Flüssigkeit ist, kann die Betriebsbremse 540 in einem nicht dargestellten, geschlossenen Bremsgehäuse angeordnet sein, so dass der Innenraum des geschlossenen Bremsgehäuses den Vorratsbehälter bildet.

Obwohl die Erfindung durch die Darstellung spezifischer Ausführungsbeispiele anhand einer Fahrtreppe und eines Aufzugs beschrieben worden ist, ist es offensichtlich, dass diese auch in einem Fahrsteig eingesetzt werden kann und zahlreiche weitere Ausführungsvarianten in Kenntnis der vorliegenden Erfindung durch Kombination der Merkmale der Ausführungsbeispiele geschaffen werden können. So kann eine Bremsbacke mindestens eine Passage und einen Einlaufbereich aufweisen, die gemeinsam oder getrennt durch mindestens eine Zuführvorrichtung mit Fluid versorgt werden können. Ferner können bei Fangbremsen alle Leitungen ausserhalb des Keilkörpers angeordnet sein. Selbstverständlich können die Fluidquelle und die Zuführvorrichtung auch im Bremsgehäuse angeordnet sein. Vorzugsweise wird die Fluidquelle einer Fangbremse aber gut erreichbar an der Kabine angeordnet, damit diese einfach und rasch mit Fluid gefüllt werden kann.

Zudem kann bei Betriebsbremsen als Gegenstück anstelle einer Bremstrommel auch eine Bremsscheibe verwendet werden, wobei die an sich bekannten Bremssättel zwecks Zuführung von Fluid mit entsprechenden Bremsbacken und einer Zuführvorrichtung zu versehen sind, die an eine Fluidquelle angeschlossen werden kann. Ferner kann jedes beschriebene Bremssystem mit einem Steuerventil und einer Steuerung ausgerüstet sein. Alle diese Kombinationen werden durch den Schutzumfang umfasst.

## Patentansprüche

1. Bremssystem (100, 200, 300, 431, 432, 440, 540) eines Aufzuges (400), einer Fahrtreppe (500) oder eines Fahrsteiges (500), welches Bremssystem (100, 200, 300, 431, 432, 440, 540) eine Bremsvorrichtung (101, 301) mit mindestens einer Bremsbacke (111, 211, 311A, 311B, 446, 447, 546, 547) beinhaltet und welche Bremsbacke (111, 211, 311A, 311B, 446, 447, 546, 547) eine Wirkfläche (116, 216, 316A, 316B, 448, 449, 548, 549) aufweist, die während eines Bremseinsatzes gegen eine relativ zur Wirkfläche (116, 216, 316A, 316B, 448, 449, 548, 549) sich bewegende oder bewegbare Reibfläche (121, 493, 593) eines Gegenstücks (120, 413, 414, 442, 542) gepresst ist, **dadurch gekennzeichnet, dass** das Bremssystem (100, 200, 300, 431, 432, 440, 540) ferner eine Zuführvorrichtung (103, 203, 441, 541) aufweist die durch eine Fluidquelle (102, 202, 402, 450, 550) gespeist ist, dass mittels der Zuführvorrichtung (103, 203, 441, 541) ein Fluid (154, 254) zwischen die Wirkfläche (116, 216, 316A, 316B, 448, 449, 548, 549) der Bremsbacke (111, 211, 311A, 311B, 446, 447, 546, 547) und der ihr zugewandten Reibfläche (121, 493, 593) zuführbar ist und dass durch die Zuführung des Fluides (154, 254) die Reibung zwischen der Wirkfläche (116, 216, 316A, 316B, 448, 449, 548, 549) und der Reibfläche (121, 493, 593) beeinflusst ist.

2. Bremssystem (100, 200, 300, 431, 432, 440, 540) nach Anspruch 1, wobei die Zuführvorrichtung (103, 203, 441, 541) mindestens eine in der Bremsbacke (111, 211, 311A, 311B, 446, 447, 546, 547) ausgebildete Passage (113) beinhaltet, wobei die Passage (113) einen Eingang (114) und einen in die Wirkfläche (116, 216, 316A, 316B, 448, 449, 548, 549) mündenden Ausgang (115) aufweist, der Eingang (114) mit der Fluidquelle (102, 202, 402, 450, 550) verbunden ist und wobei mit der Fluidquelle (102, 202, 402, 450, 550) einen ausreichender Fluiddruck erzeugbar ist um das Fluid (154, 254) zwischen die gegeneinander gepresste Reibfläche (121, 493, 593) und Wirkfläche (116, 216, 316A, 316B, 448, 449, 548, 549) zuzuführen.

3. Bremssystem (100, 200, 300, 431, 432, 440, 540) nach Anspruch 2, wobei die Bremsbacke (111, 211, 311A, 311B, 446, 447, 546, 547) eine Wirkfläche (116, 216, 316A, 316B, 448, 449, 548, 549) mit Bohrungen und/oder Nuten (117) aufweist und der Ausgang (115) der mindestens einen Passage (113) zwischen den Bohrungen und/oder Nuten (117) in die Wirkfläche (116, 216, 316A, 316B, 448, 449, 548, 549) mündet.

4. Bremssystem (100, 200, 300, 431, 432, 440, 540) nach Anspruch 2 oder 3, wobei die Bremsbacke (111, 211, 311A, 311B, 446, 447, 546, 547) mindestens zwei in ihre Wirkfläche (116, 216, 316A, 316B, 448, 449, 548, 549) mündende Passagen (113) aufweist und die Eingänge (114) der Passagen (113) durch eine gemeinsame Versorgungsleitung (118) mit der Fluidquelle (102, 202, 402, 450, 550) verbunden sind.

5. Bremssystem (100, 200, 300, 431, 432, 440, 540) nach Anspruch 1, wobei die Zuführvorrichtung (103, 203, 441, 541) mindestens einen an der Bremsbacke (111,211, 311A, 311B, 446, 447, 546, 547) ausgebildeten Einlaufbereich (213) und mindestens eine Zuführleitung (218) mit mindestens einer auf diesen Einlaufbereich (213) gerichteten Mündung (215) aufweist, wobei die Zuführleitung (218) mit der Fluidquelle (102, 202, 402, 450, 550) verbunden ist und ein Fluid (154, 254) der Fluidquelle (102, 202, 402, 450, 550) durch die Mündung (215) in den Einlaufbereich (213) zuführbar ist und infolge einer relativen Bewegung der Reibfläche (121, 493, 593) zur Wirkfläche (116, 216, 316A, 316B, 448, 449, 548, 549) das Fluid (154, 254) zwischen die gegeneinander gepresste Reibfläche (121, 493, 593) und Wirkfläche (116, 216, 316A, 316B, 448, 449, 548, 549) gelangt.

6. Bremssystem (100, 200, 300, 431, 432, 440, 540) nach einem der Ansprüche 1 bis 5, wobei das Bremssystem (100, 200, 300, 431, 432, 440, 540) eine Fluidquelle (102, 202, 402, 450, 550) beinhaltet, die eine Fördervorrichtung, insbesondere eine Pumpe (151), ein Druckzylinder oder einen Gasdruckbehälter (202) aufweist.

7. Bremssystem (100, 200, 300, 431, 432, 440, 540) nach einem der Ansprüche 1 bis 6, wobei das Bremssystem (100, 200, 300, 431, 432, 440, 540) zur Regulierung der Zuführung des Fluides (154, 254) ein Steuerventil (142, 242) und eine auf das Steuerventil (142, 242) wirkende Steuerung (161) aufweist.

8. Bremssystem (100, 200, 300, 431, 432, 440, 540) nach Anspruch 7, wobei das Bremssystem (100, 200, 300, 431, 432, 440, 540) einen Sensor (162) aufweist, durch welchen eine Änderung der relativen Bewegung der Reibfläche (121, 493, 593) zur Wirkfläche (116, 216, 316A, 316B, 448, 449, 548, 549) erfassbar und dessen Ausgangssignal an die Steuerung (161) übertragbar ist.

9. Bremssystem (100, 200, 300, 431, 432, 440, 540) nach einem der Ansprüche 7 oder 8, wobei durch Steuersignale der Steuerung (161) das Steuerventil (142, 242) einen pulsierenden Fluidstrom erzeugt.

10. Bremssystem (100, 200, 300, 431, 432, 440, 540) nach einem der Ansprüche 1 bis 9, wobei das Fluid (154, 254) ein technisches Gas (254), vorzugsweise Pressluft oder eine Flüssigkeit (154), vorzugsweise ein Mineralöl ohne Hochdruckadditive wie Verschleißminderer, Reibungsminderer und/oder Fressschutzadditive ist.

11. Bremssystem (100, 200, 300, 431, 432, 440, 540) nach einem der Ansprüche 1 bis 10, wobei das Bremssystem (440, 540) eine Betriebsbremse (440, 540) ist, die als Gegenstück (442, 542) eine Bremstrommel oder eine Bremsscheibe aufweist.

12. Bremssystem (100, 200, 300, 431, 432, 440, 540) nach einem der Ansprüche 1 bis 10, wobei das Bremssystem (100, 200, 300, 431, 432, 440, 540) eine Fangvorrichtung (100, 200, 300, 431, 432) ist und an einem Gegenstück (120, 413, 414), welches eine Führungsschiene oder eine gesondert angeordnete Bremsschiene ist, bremsen kann.

13. Bremssystem (100, 200, 300, 431, 432, 440, 540) nach einem der Ansprüche 1 bis 12, wobei das Bremssystem (100, 200, 300, 431, 432, 440, 540) mindestens eine fluidgespeiste Reinigungsvorrichtung (204) aufweist, welche der Bremsbacke (111, 211, 311A, 311B, 446, 447, 546, 547) vorgelagert ist und der Reinigung des Gegenstücks (120, 413, 414, 442, 542) dient.

14. Verfahren zum Bremsen einer Aufzugskabine (410) eines Aufzuges (400), eines Stufenbandes (513) einer Fahrtreppe (500) oder eines Palettenbandes (513) eines Fahrsteiges (500), mit einem Bremssystem (100, 200, 300, 431, 432, 440, 540) nach einem der Ansprüche 1 bis 13, **dadurch gekennzeichnet, dass** während eines Bremseinsatzes des Bremssystems (100, 200, 300, 431, 432, 440, 540) durch die Zuführvorrichtung (103, 203, 441, 541) zumindest einmal eine vorgegebene Menge eines Fluides (154, 254) über die Passage der Bremsbacke (111, 211, 311A, 311B, 446, 447, 546, 547) oder über die Mündung und den Einlaufbereich zwischen die Wirkfläche (116, 216, 316A, 316B, 448, 449, 548, 549) und die Reibfläche (121, 493, 593) zugeführt wird, um die Reibung zwischen der Wirkfläche (116, 216, 316A, 316B, 448, 449, 548, 549) der Bremsbacke (111, 211, 311A, 311B, 446, 447, 546, 547) und der ihr zugewandten Reibfläche (121, 493, 593) zu beeinflussen.

15. Verfahren nach Anspruch 14, wobei das Bremssystem (100, 200, 300, 431, 432, 440, 540) eine Steuerung (161) mit mindestens einer Recheneinheit und mit mindestens einer Speichereinheit (163) aufweist, so dass in der Speichereinheit () zeitabhängige Kenndaten eines Bremseinsatzes wie Temperatur, Fluiddruck, Verzögerungswerte und/oder Verzögerungsprofile mit einer Zeitinformation abgespeichert werden und aus diesen Kenndaten Steuergrößen für den nächsten Bremseinsatz errechnet werden.

## Claims

1. Brake system (100, 200, 300, 431, 440, 540) of an elevator (400), an escalator (500) or a moving walkway (500), which brake system (100, 200, 300, 431, 440, 540) includes a brake device (101, 301) with at least one brake shoe (111, 211, 311A, 311B, 446, 447, 546, 547) which brake shoe (111, 211, 311A, 311B, 446, 447, 546, 547) comprises an effective surface (116, 216, 316A, 316B, 448, 449, 548, 549) which during brake use is pressed against a friction surface (121, 493, 593), which is moving or movable relative to the effective surface (116, 216, 316A, 316B, 448, 449, 548, 549), of a counter-member (120, 413, 414, 442, 542), **characterised in that** the brake system (100, 200, 300, 431, 440, 540) further comprises a feed device (103, 203, 441, 541) supplied by a fluid source (102, 202, 402, 450, 550), that a fluid (154, 254) can be fed between the effective surface (116, 216, 316A, 316B, 448, 449, 548, 549) of the brake shoe (111, 211, 311A, 311B, 446, 447, 546, 547) and the friction surface (121, 493, 593) facing it by means of the feed device (103, 203, 441, 541) and that the friction between the effective surface (116, 216, 316A, 316B, 448, 449, 548, 549) and the friction surface (121, 493, 593) is influenced by feed of the fluid (154, 254).

2. Brake system (100, 200, 300, 431, 440, 540) according to claim 1, wherein the feed device (103, 203, 441, 541) includes at least one passage (113) formed in the brake shoe (111, 211, 311A, 311B, 446, 447, 546, 547), wherein the passage (113) has an inlet (114) and an outlet (115) which opens in the effective surface (116, 216, 316A, 316B, 448, 449, 548, 549), the inlet (114) is connected with the fluid source (102, 202, 402, 450, 550) and a sufficient fluid pressure can be generated by the fluid source (102, 202, 402, 450, 550) in order to feed the fluid (154, 254) between the friction surface (121, 493, 593) and effective surface (116, 216, 316A, 316B, 448, 449, 548, 549) pressed against one another.

3. Brake system (100, 200, 300, 431, 440, 540) according to claim 2, wherein the brake shoe (111, 211, 311A, 311B, 446, 447, 546, 547) comprises an effective surface (116, 216, 316A, 316B, 448, 449, 548, 549) with bores and/or grooves (117) and the outlet (115) of the at least one passage (113) opens in the effective surface (116, 216, 316A, 316B, 448, 449, 548, 549) between the bores and/or grooves (117).

4. Brake system (100, 200, 300, 431, 440, 540) according to claim 2 or 3, wherein the brake shoe (111, 211, 311A, 311B, 446, 447, 546, 547) comprises at least two passages (113) opening in its effective surface (116, 216, 316A, 316B, 448, 449, 548, 549) and the inlets (114) of the passages (113) are connected with the fluid source (102, 202, 402, 450, 550) by a common supply duct (118).

5. Brake system (100, 200, 300, 431, 440, 540) according to claim 1, wherein the feed device (103, 203, 441, 541) comprises at least one inlet region (213) formed at the brake shoe (111, 211, 311A, 311B, 446, 447, 546, 547) and at least one feed line (218) with at least one opening (215) directed onto this inlet region (213), wherein the feed line (218) is connected with the fluid source (102, 202, 402, 450, 550) and a fluid (154, 254) of the fluid source (102, 202, 402, 450, 550) can be fed through the opening (215) into the inlet region (213) and as a consequence of a relative movement of the friction surface (121, 493, 593) with respect to the effective surface (116, 216, 316A, 316B, 448, 449, 548, 549) the fluid (154, 254) passes between the friction surface 121, 493, 593) and effective surface (116, 216, 316A, 316B, 448, 449, 548, 549) pressed against one another.

6. Brake system (100, 200, 300, 431, 440, 540) according to any one of claims 1 to 5, wherein the brake system (100, 200, 300, 431, 440, 540) includes a fluid source (102, 202, 402, 450, 550) which comprises a conveying device, particularly a pump (151), a pressure cylinder or a gas pressure container (202).

7. Brake system (100, 200, 300, 431, 440, 540) according to any one of claims 1 to 6, wherein the brake system (100, 200, 300, 431, 440, 540) comprises a control valve (142, 242) and a control (161), which acts on the control valve (142, 242), for regulation of the feed of the fluid (154, 254).

8. Brake system (100, 200, 300, 431, 440, 540) according to claim 7, wherein the brake system (100, 200, 300, 431, 440, 540) comprises a sensor (162) by which a change of the relative movement of the friction surface (121, 493, 593) with respect to the effective surface (116, 216, 316A, 316B, 448, 449, 548, 549) is detectable and the output signal of the sensor (162) is transmissible to the control (161).

9. Brake system (100, 200, 300, 431, 440, 540) according to one of claims 7 and 8, wherein through control signals of the control (161) the control valve (142, 242) generates a pulsating fluid flow.

10. Brake system (100, 200, 300, 431, 440, 540) according to any one of claims 1 to 9, wherein the fluid (154, 254) is a technical gas (254), preferably compressed air or a liquid (154), preferably a mineral oil without high-pressure additives such as wear-reducing agents, friction-reducing agents and/or corrosion-protection additives.

11. Brake system (100, 200, 300, 431, 440, 540) according to any one of claims 1 to 10, wherein the brake system (440, 540) is an operating brake (440, 540) which comprises a brake drum or a brake disc as counter-member (442, 542).

12. Brake system (100, 200, 300, 431, 440, 540) according to any one of claims 1 to 10, wherein the brake system (100, 200, 300, 431, 440, 540) is a safety brake device (100, 200, 300, 431, 432) and can brake against a counter-member (120, 413, 414), which is a guide rail or a separately arranged brake rail.

13. Brake system (100, 200, 300, 431, 440, 540) according to any one of claims 1 to 12, wherein the brake system (100, 200, 300, 431, 440, 540) comprises at least one fluid-supplied cleaning device (204) which is mounted upstream of the brake shoe (111, 211, 311A, 311B, 446, 447, 546, 547) and serves for cleaning the counter-member (120, 413, 414, 442, 542).

14. Method of braking an elevator car (410) of an elevator (400), a step belt (513) of an escalator (500) or a plate belt (513) of a moving walkway (500), with a brake system (100, 200, 300, 431, 440, 540) according to any one of claims 1 to 13, **characterised in that** during brake use of the brake system (100, 200, 300, 431, 440, 540) a predetermined amount of a fluid (154, 254) is fed at least once via the passage of the brake shoe (111, 211, 311A, 311B, 446, 447, 546, 547) or via the opening and the inlet region between the effective surface (116, 216, 316A, 316B, 448, 449, 548, 549) and the friction surface (121, 493, 593) in order to influence the friction between the effective surface (116, 216, 316A, 316B, 448, 449, 548, 549) of the brake shoe (111, 211, 311A, 311B, 446, 447, 546, 547) and the friction surface (121, 493, 593) facing it.

15. Method according to claim 14, wherein the brake system (100, 200, 300, 431, 440, 540) comprises a control (161) with at least one computer unit and with at least one memory unit (163), so that time-dependent characteristic data of brake use such as temperature, fluid pressure, deceleration values and/or deceleration profiles are stored in the memory unit (163) together with time information and control variables for the next braking use are calculated from these characteristic data.

## Revendications

1. Système de freinage (100, 200, 300, 431, 432, 440, 540) d'un ascenseur (400), d'un escalier roulant (500) ou d'un trottoir roulant (500), lequel système de freinage (100, 200, 300, 431, 432, 440, 540) contient un dispositif de freinage (101, 301) avec au moins une mâchoire de frein (111, 211, 311A, 311B, 446, 447, 546, 547), laquelle mâchoire de frein (111, 211, 311A, 311B, 446, 447, 546, 547) présente une surface active (116, 216, 316A, 316B, 448, 449, 548, 549) qui, pendant une mise en action du frein, est pressée contre une surface de frottement (121, 493, 593), déplacée ou apte à se déplacer par rapport à la surface active (116, 216, 316A, 316B, 448, 449, 548, 549), d'un élément opposé (120, 413, 414, 442, 542), **caractérisé en ce que** le système de frein (100, 200, 300, 431, 432, 440, 540) comporte également un dispositif d'amenée (103, 203, 441, 541) qui est alimenté par une source de fluide (102, 202, 402, 450, 550), **en ce qu'**à l'aide du dispositif d'amenée (103, 203, 441, 541), un fluide (154, 254) est apte à être amené entre la surface active (116, 216, 316A, 316B, 448, 449, 548, 549) de la mâchoire de frein (111, 211, 311 A, 311 B, 446, 447, 546, 547) et la surface de frottement (121, 493, 593) tournée vers elle, et **en ce que** grâce à l'amenée du fluide (154, 254), le frottement entre la surface active (116, 216, 316A, 316B, 448, 449, 548, 549) et la surface de frottement (121, 493, 593) est influencé.

2. Système de freinage (100, 200, 300, 431, 432, 440, 540) selon la revendication 1, étant précisé que le dispositif d'amenée (103, 203, 441, 541) contient au moins un passage (113) formé dans la mâchoire de frein (111, 211, 311A, 311B, 446, 447, 546, 547), étant précisé que le passage (113) présente une entrée (114) et une sortie (115) qui débouche dans la surface active (116, 216, 316A, 316B, 448, 449, 548, 549), que l'entrée (114) est reliée à la source de fluide (102, 202, 402, 450, 550), et qu'avec la source de fluide (102, 202, 402, 450, 550) une pression de fluide suffisante peut être produite pour amener le fluide (154, 254) entre la surface de frottement (121, 493, 593) et la surface active (116, 216, 316A, 316B, 448, 449, 548, 549) pressées l'une contre l'autre.

3. Système de freinage (100, 200, 300, 431, 432, 440, 540) selon la revendication 2, étant précisé que la mâchoire de frein (111, 211, 311A, 311 B, 446, 447, 546, 547) présente une surface active (116, 216, 316A, 316B, 448, 449, 548, 549) avec des perçages et/ou des rainures (117), et que la sortie (115) du ou des passages (113) débouche dans la surface active (116, 216, 316A, 316B, 448, 449, 548, 549) entre les perçages et/ou rainures (117).

4. Système de freinage (100, 200, 300, 431, 432, 440, 540) selon la revendication 2 ou 3, étant précisé que la mâchoire de frein (111, 211, 311A, 311 B, 446, 447, 546, 547) présente au moins deux passages (113) qui débouchent dans sa surface active (116, 216, 316A, 316B, 448, 449, 548, 549), et que les entrées (114) des passages (113) sont reliées à la source de fluide (102, 202, 402, 450, 550) par une conduite d'alimentation communie (118).

5. Système de freinage (100, 200, 300, 431, 432, 440, 540) selon la revendication 1, étant précisé que le dispositif d'amenée (103, 203, 441, 541) présente au moins une zone d'entrée (213) formée sur la mâchoire de frein (111, 211, 311A, 311B, 446, 447, 546, 547), et au moins une conduite d'amenée (218) avec au moins une ouverture (215) dirigée vers cette zone d'entrée (213), que la conduite d'amenée (218) est reliée à la source de fluide (102, 202, 402, 450, 550) et qu'un fluide (154, 254) de la source de fluide (102, 202, 402, 450, 550) est apte à être amené par l'ouverture (215) dans la zone d'entrée (213), et qu'en raison d'un mouvement relatif entre la surface de frottement (121, 493, 593) et la surface active (116, 216, 316A, 316B, 448, 449, 548, 549), le fluide (154, 254) arrive entre la surface de frottement (121, 493, 593) et la surface active (116, 216, 316A, 316B, 448, 449, 548, 549) pressées l'une contre l'autre.

6. Système de freinage (100, 200, 300, 431, 432, 440, 540) selon l'une des revendications 1 à 5, étant précisé que le système de freinage (100, 200, 300, 431, 432, 440, 540) contient une source de fluide (102, 202, 402, 450, 550) qui comporte un dispositif de refoulement, en particulier une pompe (151), un cylindre de pression ou un récipient de gaz sous pression (202).

7. Système de freinage (100, 200, 300, 431, 432, 440, 540) selon l'une des revendications 1 à 6, étant précisé que le système de freinage (100, 200, 300, 431, 432, 440, 540) comporte, pour réguler l'amenée du fluide (154, 254), une soupape de commande (142, 242) et une commande (161) qui agit sur la soupape de commande (142, 242).

8. Système de freinage (100, 200, 300, 431, 432, 440, 540) selon la revendication 7, étant précisé que le système de freinage (100, 200, 300, 431, 432, 440, 540) comporte un capteur (162) grâce auquel une variation du mouvement relatif entre la surface de frottement (121, 493, 593) et la surface active (116, 216, 316A, 316B, 448, 449, 548, 549) peut être détectée, et dont le signal de sortie peut être transmis à la commande (161).

9. Système de freinage (100, 200, 300, 431, 432, 440, 540) selon l'une des revendications 7 ou 8, étant précisé que grâce aux signaux de commande de la commande (161), la soupape de commande (142, 242) produit un écoulement de fluide pulsatoire.

10. Système de freinage (100, 200, 300, 431, 432, 440, 540) selon l'une des revendications 1 à 9, étant précisé que le fluide (154, 254) est un gaz technique (254), de préférence de l'air comprimé, ou un liquide (154), de préférence une huile minérale sans additifs haute pression comme des agents réducteur d'usure, des agents réducteurs de frottement et/ou des additifs antigrippage.

11. Système de freinage (100, 200, 300, 431, 432, 440, 540) selon l'une des revendications 1 à 10, étant précisé que le système de freinage (440, 540) est un frein de service (440, 540) qui comporte comme élément opposé (442, 542) un tambour de frein ou un disque de frein.

12. Système de freinage (100, 200, 300, 431, 432, 440, 540) selon l'une des revendications 1 à 10, étant précisé que le système de freinage (100, 200, 300, 431, 432, 440, 540) est un parachute (100, 200, 300, 431, 432) et peut freiner au niveau d'un élément opposé (120, 413, 414) qui est un rail de guidage, ou un rail de frein disposé séparément.

13. Système de freinage (100, 200, 300, 431, 432, 440, 540) selon l'une des revendications 1 à 12, étant précisé que le système de freinage (100, 200, 300, 431, 432, 440, 540) comporte au moins un dispositif de nettoyage alimenté en fluide (204) qui est monté en amont de la mâchoire de frein (111, 211, 311A, 311B, 446, 447, 546, 547) et qui sert au nettoyage de l'élément opposé (120, 413, 414, 442, 542).

14. Procédé pour freiner une cabine d'ascenseur (410) d'un ascenseur (400), une bande de marches (513) d'un escalier roulant (500) ou une bande de palettes (513) d'un trottoir roulant (500), avec un système de freinage (100, 200, 300, 431, 432, 440, 540) selon l'une des revendications 1 à 13, **caractérisé en ce que** pendant une mise en action du système de freinage (100, 200, 300, 431, 432, 440, 540), grâce au dispositif d'amenée (103, 203, 441, 541) une quantité prédéfinie d'un fluide (154, 254) est amenée au moins une fois, par le passage de la mâchoire de frein (111, 211, 311A, 311B, 446, 447, 546, 547) ou par l'ouverture et la zone d'entrée, entre la surface active (116, 216, 316A, 316B, 448, 449, 548, 549) et la surface de frottement (121, 493, 593) afin d'influer sur le frottement entre la surface active (116, 216, 316A, 316B, 448, 449, 548, 549) de la mâchoire de frein (111, 211, 311A, 311B, 446, 447, 546, 547) et la surface de frottement (121, 493, 593) tournée vers elle.

15. Procédé selon la revendication 14, étant précisé que le système de freinage (100, 200, 300, 431, 432, 440, 540) comporte une commande (161) avec au moins une unité de calcul et avec au moins une unité de mémoire (163), de sorte que des données caractéristiques d'une mise en action du frein qui sont fonction du temps, comme la température, la pression de fluide, des valeurs de retard et/ou des profils de retard avec une information de temps sont mises en mémoire dans ladite unité de mémoire (163), et qu'à partir de ces données caractéristiques, des grandeurs de commande sont calculées pour la mise en action du frein suivante.
